# EUROPÄISCHE PATENTSCHRIFT

(11) **EP 3 155 279 B1**
(45) Veröffentlichungstag und Bekanntmachung des Hinweises auf die Patenterteilung: **25.04.2018**
(21) Anmeldenummer: 15733341.0
(22) Anmeldetag: 08.06.2015
(51) Int. Cl.: F16D 25/08

(54) **AUSRÜCKVORRICHTUNG**
RELEASE MECHANISM
DISPOSITIF DE DÉBRAYAGE

(30) Priorität: 13.06.2014 DE 102014211426
(43) Veröffentlichungstag der Anmeldung: 19.04.2017
(73) Patentinhaber: Schaeffler Technologies AG & Co. KG, 91074 Herzogenaurach (DE)
(72) Erfinder: GLEBOV, Alexander, 77815 Bühl (DE)
(86) Internationale Anmeldenummer: PCT/DE2015/200347
(87) Internationale Veröffentlichungsnummer: WO 2015/188823

(56) Entgegenhaltungen:
- EP-A2- 2 022 997
- EP-A2- 2 025 962
- DE-A1- 3 002 850
- DE-A1- 19 635 101
- DE-A1- 19 716 473

## Beschreibung

Die Erfindung betrifft eine Ausrückvorrichtung, insbesondere für eine Hydraulikvorrichtung für die Betätigung eines Aggregats im Antriebsstrang eines Kraftfahrzeugs.

Ausrückvorrichtungen mit Nehmerzylinder für die Betätigung einer Kupplung im Antriebsstrang eines Kraftfahrzeugs sind vielfältig bekannt geworden. Dabei sind so genannte Zentralausrücker mit integriertem Nehmerzylinder bekannt geworden, bei welchen das Ausrücklager auf einer Hülse verschiebbar angeordnet ist, wobei ein ringförmiger Nehmerzylinder vorgesehen ist, dessen Kolben das Ausrücklager verlagert. Solche Nehmerzylinder sind beispielsweise durch die EP 2 025 962 A2 bekannt geworden.

Die Ausrückvorrichtung mit Nehmerzylinder der EP 2 025 962 A2 weist einen Rollbalg als Schmutzschutz auf, der einerseits an einer Zylinderwand radial außerhalb des Kolbens in einer Nut eingehängt ist und andererseits zwischen einem Lagerring und einer Feder eingeklemmt ist. Dadurch rollt sich der Rollbalg im Betrieb auf der Zylinderwand zwischen Feder und Zylinderwand ab. Diese Konstruktion zeigt sich als eher weniger montagefreundlich, weil das Einfädeln des Endes des Rollbalgs in die Nut der Zylinderwand nach dem Einklemmen zwischen Lagerring und Feder sich als eher kompliziert darstellt und anschließend noch der Kolben in das Lager eingeklipst werden muss und anschließend der Anschlag gebördelt wird.

Es ist die Aufgabe der vorliegenden Erfindung, eine Ausrückvorrichtung zu schaffen, welche gegenüber dem Stand der Technik verbessert ist, einfach zu montieren ist und dennoch einen sicheren Schutz vor Verschmutzung zeigt.

Die Aufgabe der Erfindung wird mit den Merkmalen von Anspruch 1 gelöst.
Ein Ausführungsbeispiel der Erfindung betrifft eine Ausrückvorrichtung mit einem Gehäuse mit einem darin angeordneten Druckraum mit einem darin verlagerbar angeordneten Kolben, mit einem Ausrücklager mit einem ersten Lagerring und mit einem zweiten Lagerring, wobei der Kolben mit einem der Lagerringe in Wirkverbindung steht, zur axialen Verlagerung des Ausrücklagers, mit einem Kraftspeicher, welcher sich einerseits an dem Gehäuse und andererseits an dem einen der Lagerringe abstützt, wobei ein Schmutzschutz als Rollbalg vorgesehen ist, wobei der Rollbalg mit zwei Endbereichen ausgebildet ist, wobei einer der Endbereiche zwischen dem Gehäuse und dem Kraftspeicher gehalten ist und der andere Endbereich an dem axial verlagerbaren Kolben gehalten ist. Dadurch lässt sich der Rollbalg deutlich leichter montieren und darüber hinaus hat der Rollbalg deutlich mehr Platz zur Verfügung, um sich abzurollen.
Besonders vorteilhaft ist es, wenn der Rollbalg mit seinem einen Endbereich zwischen Gehäuse und Kraftspeicher gehalten ist, wobei der Endbereich in eine Aufnahme des Gehäuses aufgenommen ist, in welche auch der Kraftspeicher eingreift. Dadurch wird eine eindeutige Positionierung von Rollbalgendbereich und Kraftspeicher erreicht.
Gemäß eines Ausführungsbeispiels der Erfindung ist es zweckmäßig, wenn der eine Endbereich des Rollbalgs einen in radialer Richtung vorstehenden Kragen aufweist. So wird es erlaubt, dass sich der Kraftspeicher flächig an dem Endbereich des Rollbalgs anlegt.
So ist es auch vorteilhaft, wenn der Kragen sich am Grund der Aufnahme abstützt. Dadurch kann sich der Kraftspeicher unter Zwischenlage des Kragens indirekt am Grund der Aufnahme abstützen und so eine sichere Anlage erfahren.

Auch ist es zweckmäßig, wenn der Kolben eine radial außen angeordnete Nut aufweist, in welche der andere Endbereich des Rollbalgs eingreift. Dadurch wird eine platzsparende und sichere Art der Befestigung des Rollbalgs erreicht.

Auch ist es vorteilhaft, wenn der andere Endbereich des Rollbalgs eine Verdickung aufweist zum Halten des Endbereichs in der Nut des Kolbens. So wird der Rollbalg sicher in der Nut aufgenommen und gehalten.

Auch ist es zweckmäßig, wenn der Kolben ein Ringkolben ist und der Druckraum ein ringförmiger Druckraum ist. Dadurch wird eine effiziente Gestaltung erreicht, die sich um eine Getriebeeingangswelle herum anordnen kann.

Auch ist es zweckmäßig, wenn die Nut eine Ringnut ist, welche an der radial außen liegenden Seite des Ringkolbens angeordnet ist. Entsprechend einfach kann der Rollbalg fixiert werden.

Erfindungsgemäß ist es weiterhin zweckmäßig, wenn an dem Kolben ein Dichtelement angeordnet ist, welches mit dem Kolben formschlüssig verbunden ist. Dieses Dichtelement kann dabei in einer Nut, wie insbesondere in einer weiteren Nut des Kolbens befestigt und mit dem Kolben verbunden werden.

Auch ist es bei einem Ausführungsbeispiel zweckmäßig, wenn das Gehäuse eine hohlzylindrische Wand aufweist, welche von dem Rollbalg zumindest teilweise umgreifbar ist. Dadurch wird der für die Rollbewegung verfügbare Raum günstig genutzt.

Die vorliegende Erfindung wird nachfolgend anhand bevorzugter Ausführungsbeispiele in Verbindung mit den zugehörigen Figuren näher erläutert:
Dabei zeigt:
   - Figur 1: eine schematische Schnittdarstellung einer erfindungsgemäßen Ausrückvorrichtung in einer ersten Betriebsposition, und
   - Figur 2: eine schematische Schnittdarstellung der erfindungsgemäßen Ausrückvorrichtung in einer zweiten Betriebsposition.

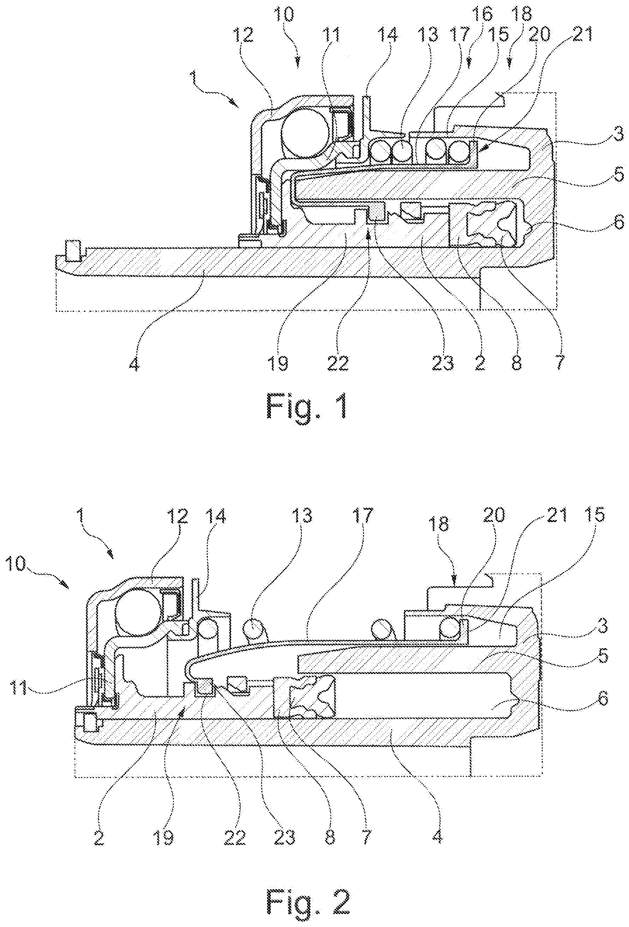

Die Figur 1 zeigt eine Ausrückvorrichtung 1 in einer ersten Betriebsposition mit eingefahrenem Kolben 2 und die Figur 2 zeigt die Ausrückvorrichtung 1 in einer zweiten Betriebsposition mit ausgefahrenem Kolben 2.

Die Ausrückvorrichtung 1 weist ein Gehäuse 3 auf, welches hülsenförmig ausgebildet ist und eine zentrale Hülse 4 und eine zweite Hülse 5 aufweist. Die beiden Hülsen 4, 5 bilden zwischen sich einen ringförmigen Druckraum 6, in welchem der Kolben 2, als Ringkolben ausgebildet, axial verlagerbar aufgenommen ist. An dem Kolben 2 ist ein Dichtelement 7 befestigt, welches den Druckraum 6 nach außen abdichtet. Dazu ist das Dichtelement 7 mittels eines Dichtungsträgers 8 mit Haltearm in einer Nut 9 des Kolbens 2 eingehängt. Die Nut 9 ist dazu radial außen am Kolben 2 eingebracht.

Die Ausrückvorrichtung 1 ist weiterhin mit einem Ausrücklager 10 versehen, wobei das Ausrücklager einen ersten Lagerring 11 und einen zweiten Lagerring 12 aufweist.
Der erste Lagerring 11 dient der Beaufschlagung des Ausrücklagers 10 durch den Kolben 2 zur axialen Verlagerung des Ausrücklagers 10 und der zweite Lagerring 12 dient der Beaufschlagung beispielsweise einer Kupplung.

Zwischen dem Gehäuse 3 und dem ersten Lagerring 11 ist ein Kraftspeicher 13 vorgesehen, welcher sich einerseits am Gehäuse 3 und andererseits an dem Lagerring 11 abstützt. Zur Abstützung am Lagerring ist ein Zwischenelement 14 vorgesehen. Dieses untergreift den Lagerring und auch den Kraftspeicher 13. Der Kraftspeicher greift andererseits in eine Aufnahme 15 des Gehäuses 3 ein.

Zur Betätigung des Ausrücklagers 10 steht der Kolben mit einem der Lagerringe 11 in Wirkverbindung.

Weiterhin ist ein Schmutzschutz 16 als Rollbalg 17 vorgesehen, wobei der Rollbalg 17 mit zwei Endbereichen 18, 19 ausgebildet ist, wobei einer der Endbereiche 18 zwischen dem Gehäuse 3 und dem Kraftspeicher 13 gehalten ist und der andere Endbereich 19 an dem axial verlagerbaren Kolben 2 gehalten ist. Hierzu ist der Rollbalg 17 mit seinem einen Endbereich 18 zwischen Gehäuse 3 und Kraftspeicher 13 gehalten, wobei der Endbereich 18 mit einem in radialer Richtung vorstehenden Kragen 20 ausgebildet ist, welcher in eine Aufnahme 15 des Gehäuses 3 aufgenommen ist. In diese Aufnahme 15 greift auch der Kraftspeicher 13 ein. Der Kraftspeicher stützt sich dabei an dem in radialer Richtung sich erstreckenden Kragen 20 ab, welcher sich selbst wiederum an dem Grund 21 der Aufnahme 15 abstützt.

Zur Befestigung des anderen Endbereichs 19 des Rollbalgs 17 weist der Kolben 2 eine radial außen angeordnete Nut 22 auf, in welche der andere Endbereich 19 des Rollbalgs 17 eingreift. Dazu weist der andere Endbereich 19 des Rollbalgs 17 eine Verdickung 23 auf, die dazu dient, den Endbereichs 19 des Rollbalgs 17 in der Nut 22 des Kolbens 2 zu halten.

In Figur 1 ist der Kolben 2 in der eingefahrenen Betriebsposition gezeigt, was bedeutet, dass der Kolben 2 nahezu vollständig in den Druckraum 6 eingefahren ist. Dies bewirkt, dass der Rollbalg 17 sich im Wesentlichen um die Hülse 5 herum legt. In Figur 2 ist der Kolben 2 in der ausgefahrenen Betriebsposition gezeigt, was bedeutet, dass der Kolben 2 nahezu vollständig aus dem Druckraum 6 ausgefahren ist. Dies bewirkt, dass der Rollbalg 17 sich im Wesentlichen von der Hülse 5 löst und eine Art freiliegende Tasche bildet.

Gemäß des Ausführungsbeispiels ist der Kolben 2 ein Ringkolben und der Druckraum 6 ist ein ringförmiger Druckraum. Die Nut 22 zum Halten des Endbereichs 19 des Rollbalgs 17 ist eine Ringnut, welche an der radial außen liegenden Seite des Ringkolbens 2 angeordnet ist. Dadurch kann der Rollbalg 17 einfach auf den Kolben 2 aufgeschoben werden.

### Bezugszeichenliste

- 1: Ausrückvorrichtung
- 2: Kolben
- 3: Gehäuse
- 4: Hülse
- 5: Hülse
- 6: Druckraum
- 7: Dichtelement
- 8: Dichtungsträger
- 9: Nut
- 10: Ausrücklager
- 11: Lagerring
- 12: Lagerring
- 13: Kraftspeicher
- 14: Zwischenelement
- 15: Aufnahme
- 16: Schmutzschutz
- 17: Rollbalg
- 18: Endbereich
- 19: Endbereich
- 20: Kragen
- 21: Grund
- 22: Nut
- 23: Verdickung

## Patentansprüche

1. Ausrückvorrichtung (1) mit einem Gehäuse (3) mit einem darin angeordneten Druckraum (6) mit einem darin verlagerbar angeordneten Kolben(2), mit einem Ausrücklager (10) mit einem ersten Lagerring (11) und mit einem zweiten Lagerring (12), wobei der Kolben (2) mit einem der Lagerringe (11,12) in Wirkverbindung steht, zur axialen Verlagerung des Ausrücklagers (10), mit einem Kraftspeicher (13), welcher sich einerseits an dem Gehäuse (3) und andererseits an dem einen der Lagerringe (11,12) abstützt, wobei ein Schmutzschutz (16) als Rollbalg (17) vorgesehen ist, und der Rollbalg (17) mit zwei Endbereichen (18,19) ausgebildet ist, **dadurch gekennzeichnet, dass** einer der Endbereiche (18) zwischen dem Gehäuse (3) und dem Kraftspeicher (13) gehalten ist und der andere Endbereich (19) an dem axial verlagerbaren Kolben (2) gehalten ist.

2. Ausrückvorrichtung (1) nach Anspruch 1, **dadurch gekennzeichnet, dass** der Rollbalg (17) mit seinem einen Endbereich (18) zwischen Gehäuse (3) und Kraftspeicher (13) gehalten ist, wobei der Endbereich (18) in eine Aufnahme (15) des Gehäuses (3) aufgenommen ist, in welche auch der Kraftspeicher (13) eingreift.

3. Ausrückvorrichtung (1) nach Anspruch 1 oder 2, **dadurch gekennzeichnet, dass** der eine Endbereich (18) des Rollbalgs einen in radialer Richtung vorstehenden Kragen (20) aufweist.

4. Ausrückvorrichtung (1) nach einem der vorhergehenden Ansprüche, **dadurch gekennzeichnet, dass** der Kragen (20) sich am Grund (21) der Aufnahme (15) abstützt.

5. Ausrückvorrichtung (1) nach einem der vorhergehenden Ansprüche, **dadurch gekennzeichnet, dass** der Kolben (2) eine radial außen angeordnete Nut (22) aufweist, in welche der andere Endbereich (19) des Rollbalgs (17) eingreift.

6. Ausrückvorrichtung (1) nach einem der vorhergehenden Ansprüche, **dadurch gekennzeichnet, dass** der andere Endbereich (19) des Rollbalgs (17) eine Verdickung (23) aufweist zum Halten des Endbereichs (19) in der Nut (22) des Kolbens (2).

7. Ausrückvorrichtung (1) nach einem der vorhergehenden Ansprüche, **dadurch gekennzeichnet, dass** der Kolben (2) ein Ringkolben ist und der Druckraum (6) ein ringförmiger Druckraum ist.

8. Ausrückvorrichtung (1) nach einem der vorhergehenden Ansprüche, **dadurch gekennzeichnet, dass** die Nut (22) eine Ringnut ist, welche an der radial außen liegenden Seite des Ringkolbens (2)angeordnet ist.

9. Ausrückvorrichtung (1) nach einem der vorhergehenden Ansprüche, **dadurch gekennzeichnet, dass** an dem Kolben (2) ein Dichtelement (7) angeordnet ist, welches mit dem Kolben (2) formschlüssig verbunden ist.

10. Ausrückvorrichtung (1) nach einem der vorhergehenden Ansprüche, **dadurch gekennzeichnet, dass** das Gehäuse (3) eine hohlzylindrische Wand (5) aufweist, welche von dem Rollbalg (17) zumindest teilweise umgreifbar ist.

## Claims

1. Release apparatus (1) having a housing (3) with a pressure space (6) which is arranged therein with a piston (2) which is arranged movably therein, having a release bearing (10) with a first bearing ring (11) and with a second bearing ring (12), the piston (2) being operatively connected to one of the bearing rings (11, 12), for the axial movement of the release bearing (10), having a force accumulator (13) which is supported on one side on the housing (3) and on the other side on the one of the bearing rings (11, 12), a dirt guard (16) being provided as a gaiter (17), and the gaiter (17) being configured with two end regions (18, 19), **characterized in that** one of the end regions (18) is held between the housing (3) and the force accumulator (13), and the other end region (19) is held on the axially movable piston (2).

2. Release apparatus (1) according to Claim 1, **characterized in that** the gaiter (17) is held by way of its one end region (18) between the housing (3) and the force accumulator (13), the end region (18) being received into a receptacle (15) of the housing (3), into which receptacle (15) the force accumulator (13) also engages.

3. Release apparatus (1) according to Claim 1 or 2, **characterized in that** the one end region (18) of the gaiter has a collar (20) which projects in the radial direction.

4. Release apparatus (1) according to one of the preceding claims, **characterized in that** the collar (20) is supported on the bottom (21) of the receptacle (15).

5. Release apparatus (1) according to one of the preceding claims, **characterized in that** the piston (2) has a groove (22) which is arranged radially on the outside and into which the other end region (19) of the gaiter (17) engages.

6. Release apparatus (1) according to one of the preceding claims, **characterized in that** the other end region (19) of the gaiter (17) has a thickened portion (23) for holding the end region (19) in the groove (22) of the piston (2).

7. Release apparatus (1) according to one of the preceding claims, **characterized in that** the piston (2) is an annular piston and the pressure space (6) is an annular pressure space.

8. Release apparatus (1) according to one of the preceding claims, **characterized in that** the groove (22) is an annular groove which is arranged on the radially outer side of the annular piston (2).

9. Release apparatus (1) according to one of the preceding claims, **characterized in that** a sealing element (7) is arranged on the piston (2), which sealing element (7) is connected to the piston (2) in a positively locking manner.

10. Release apparatus (1) according to one of the preceding claims, **characterized in that** the housing (3) has a hollow-cylindrical wall (5) which can be engaged around at least partially by the gaiter (17).

## Revendications

1. Dispositif de débrayage (1) comprenant un boîtier (3) avec un espace de pression (6) disposé dans celui-ci avec un piston (2) disposé de manière déplaçable dans celui-ci, avec un palier de débrayage (10) avec une première bague de palier (11) et avec une deuxième bague de palier (12), le piston (2) étant en liaison fonctionnelle avec l'une des bagues de palier (11, 12), pour le déplacement axial du palier de débrayage (10), avec un accumulateur de force (13) qui s'appuie d'une part contre le boîtier (3) et d'autre part contre l'une des bagues de palier (11, 12), une protection contre la poussière (16) étant prévue sous la forme d'un soufflet roulant (17) et le soufflet roulant (17) étant réalisé avec deux régions d'extrémité (18, 19), **caractérisé en ce que** l'une des régions d'extrémité (18) est retenue entre le boîtier (3) et l'accumulateur de force (13) et l'autre région d'extrémité (19) est retenue au niveau du piston déplaçable axialement (2) .

2. Dispositif de débrayage (1) selon la revendication 1, **caractérisé en ce que** le soufflet roulant (17) est retenu avec l'une de ses régions d'extrémité (18) entre le boîtier (3) et l'accumulateur de force (13), la région d'extrémité (18) étant reçue dans un logement (15) du boîtier (3) dans lequel s'engage également l'accumulateur de force (13).

3. Dispositif de débrayage (1) selon la revendication 1 ou 2, **caractérisé en ce que** l'une des régions d'extrémité (18) du soufflet roulant présente un rebord (20) faisant saillie dans la direction radiale.

4. Dispositif de débrayage (1) selon l'une quelconque des revendications précédentes, **caractérisé en ce que** le rebord (20) s'appuie contre la base (21) du logement (15).

5. Dispositif de débrayage (1) selon l'une quelconque des revendications précédentes, **caractérisé en ce que** le piston (2) présente une rainure (22) disposée radialement à l'extérieur, dans laquelle s'engage l'autre région d'extrémité (19) du soufflet roulant (17).

6. Dispositif de débrayage (1) selon l'une quelconque des revendications précédentes, **caractérisé en ce que** l'autre région d'extrémité (19) du soufflet roulant (17) présente un épaississement (23) pour retenir la région d'extrémité (19) dans la rainure (22) du piston (2).

7. Dispositif de débrayage (1) selon l'une quelconque des revendications précédentes, **caractérisé en ce que** le piston (2) est un piston annulaire et l'espace de pression (6) est un espace de pression annulaire.

8. Dispositif de débrayage (1) selon l'une quelconque des revendications précédentes, **caractérisé en ce que** la rainure (22) est une rainure annulaire qui est disposée au niveau du côté radialement extérieur du piston annulaire (2).

9. Dispositif de débrayage (1) selon l'une quelconque des revendications précédentes, **caractérisé en ce qu'**un élément d'étanchéité (7) est disposé au niveau du piston (2), lequel est connecté par engagement par correspondance de formes avec le piston (2).

10. Dispositif de débrayage (1) selon l'une quelconque des revendications précédentes, **caractérisé en ce que** le boîtier (3) présente une paroi cylindrique creuse (5) qui peut être au moins en partie saisie sur son pourtour par le soufflet roulant (17).
